Europäisches Patentamt

European Patent Office

Office européen des brevets

(19)

(11) Publication number: **0 172 039 B1**

(12) **EUROPEAN PATENT SPECIFICATION**

(45) Date of publication of patent specification: **08.05.91**  (51) Int. Cl.⁵: **F16L 47/00**

(21) Application number: **85305871.7**

(22) Date of filing: **16.08.85**

(54) Fibre reinforced polymeric article.

(30) Priority: **17.08.84 GB 8420950**
**07.12.84 GB 8431041**

(43) Date of publication of application:
**19.02.86 Bulletin 86/08**

(45) Publication of the grant of the patent:
**08.05.91 Bulletin 91/19**

(84) Designated Contracting States:
**AT BE CH DE FR GB IT LI NL SE**

(56) References cited:
**EP-A- 0 052 476      EP-A- 0 100 170**
**DE-A- 2 413 734      GB-A- 1 088 572**
**GB-A- 2 076 489      US-A- 2 739 829**
**US-A- 3 382 121      US-A- 3 415 287**
**US-A- 3 957 382      US-A- 4 133 562**

(73) Proprietor: **RAYCHEM LIMITED**
**Rolls House 7, Rolls Buildings Fetter Lane**
**London, EC4 1NL(GB)**

(72) Inventor: **Archer, Joel**
**6 Rte de Magny**
**F-95420 Nucourt(FR)**
Inventor: **van Wassenhove, Denis**
**2 Placette des Myostitis**
**F-60800 Crepy en Valois(FR)**
Inventor: **Pithouse, Kenneth Brian**
**3 Pinehurst Cottage South Marston**
**Swindon Wiltshire(GB)**
Inventor: **Buck, Leslie James**
**1 Goldcrest Walk Covingham**
**Swindon Wiltshire(GB)**
Inventor: **Molyneux, Jeffrey Paul**
**18 Wanborough Road Stratton St.**
**Margaret Swindon Wiltshire(GB)**
Inventor: **Bradshaw, Peter Stuart**
**56 Cloverlands Haydon Wick**
**Swindon Wiltshire(GB)**

(74) Representative: **Jay, Anthony William et al**
**Raychem Limited Intellectual Property Law**
**Department Faraday Road**
**Dorcan Swindon Wiltshire(GB)**

**Description**

This invention relates to tubular fibre reinforced polymeric articles which may be used, for example, to couple objects, for example pipes.

Fibre reinforced composite tubes, which typically comprise a polymeric material reinforced by fibres, for example in the form of a fabric, have been used hitherto for a variety of applications. They are particularly useful in applications where low weight is of importance, for example in aircraft. Typical applications include ducts and low-load structural members, for example aircraft seats.

Published Patent Application JP-A-81133137 (Mitsubishi), describes the formation of a fibre reinforced epoxy resin composite tube in which voids are minimised by shrinking a heat shrinkable tube with a stress of at least 0.2 MPa (2 Kg/cm$^2$) over a fibre-reinforced resin at its hardening temperature on a suitably shaped mandrel. The finished dimensionally stable resin tube is removed from the mandrel for subsequent use and the shrinkable tube discarded.

Combinations of shrinkable plastics materials and fabrics wherein the shrinkable material is retained after shrinkage are also known. British Patent Specification 1088572 (Raychem-Cook), for example, describes a tubular, heat-shrinkable, synthetic plastics material having a reinforcing tubular liner of knitted fibres, which may be impregnated with adhesive.

The load-bearing capability of composite tubes known hitherto has, however, been limited, and accordinglycomposite tubes have not been used hitherto for high load bearing applications. It is an an object of the present invention, inter alia, to provide a fibre reinforced tubular article that can be used in high load bearing applications, for example as a coupler for pipes, where a high pull-out and burst strength is required, to provide a method of coupling objects using a composite tube, and to provide a method of making a fibre reinforced, composite tubular article.

A first aspect of the present invention provides a method of coupling two substrates, for example generally elongate substrates such as pipes, comprising (a) positioning around or within contiguous portions of the substrates a coupling assembly comprising a heat-recoverable tubular driver and telescoped therewith tubular coupling means comprising substantially unconsolidated fibre braid reinforcement and a polymeric material and (b) applying heat to recover the driver and to cause the polymeric material to flow such that the recovering driver consolidates the coupling means (and preferably bonds it to the elongate substrates) thereby coupling the substrates together wherein the polymeric material has a sufficiently high softening temperature so that when the heat is applied to recover the driver the braid is caused to change its braid angle by slippage of the braid fibres at their cross-over points to conform to the shape of the recovering driver before further heating causes the polymeric material to flow such that the recovering driver consolidates the coupling means.

A second aspect of the present invention provides a coupling assembly as specified in claim 4 and a kit as disclosed in claim 24. Preferably the consolidated coupling means alone is capable of coupling the elongate objects after removal of the recovered driver, the flowable polymeric material being substantially solid at least at the intended operation temperature of the consolidation coupling means

The tubular member preferably has two open ends. Preferably the member is generally circular in cross section and especially preferably is cylindrical. Both straight and bent tubular members are included.

A heat recoverable article is an article whose dimensional configuration may be made to change when subjected to heat treatment. A heat recoverable article may be, for example, heat shrinkable, that is it may recover by shrinkage when heated, or it may be, for example, heat expandable, that is it may recover by expanding when heated.

Heat recoverable articles usually recover, on heating, towards an original shape from which they have previously been deformed but the term "heat-recoverable", as used herein, also includes an article which, on heating, adopts a new configuration, even if it has not been previously deformed.

In their most common form, heat-recoverable articles comprise a heat-shrinkable sleeve made from a polymeric material exhibiting the property of elastic or plastic memory as described, for example in U.S. Patents 2,027,962, 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric article into the desired heat-unstable form, subsequently cross-linking the polymeric material, heating the article to a temperature above the crystalline melting point or, for amorphous materials the softening point as the case may be, of the polymer, deforming the article and cooling the article whilst in the deformed state so that the deformed state of the article is retained. In use, since the deformed state of the article is heat-unstable, application of heat will cause the article to assume its original heat-unstable shape.

In other articles, as described, for example, in British Patent 1,440,524, an elastomeric member such as an outer tubular member is held in a stretched state by a second member, such as an inner tubular member, which upon heating weakens and thus allows the elastomer member to recover.

The driver and the coupling member are preferably telescoped such that the driver is on the outside of the coupling member and the driver is arranged to recover radially inwards, that is to be heat shrinkable. In another embodiment where the substrates to be coupled are hollow, for example where the substrates are pipes, the driver may be positioned within the coupling member and be arranged to recover outwardly to couple the substrates internally. An external driver is however preferred even for hollow substrates such as pipes. In use, when the coupling member has been consolidated and bonded to the substrates, the driver may, if desired, be removed and discarded.

A particularly high strength composite tube, may be made if the polymeric material of the coupling member has a viscosity of at least 2500 Poise, preferably at least 2000 Poise, more preferably at least 5000 Poise, especially preferably at least 10000 Poise, at the consolidation temperature. Many thermoplastic polymeric materials, particularly those having a high melting point typically have a viscosity above this preferred value of 2500 Poise at the consolidation temperature. These thermoplastic materials may accordingly be used in the preferred embodiments. As specific examples there may be mentioned nylon and aromatic polymers, for example polyaryletherketones. Where a thermoplastic material is used the composite tube may be operated at temperatures up to the melting point of the thermoplastic. Typical high melting point thermoplastics, for example polyaryletherketones have a melting point of about 360° C, and composite tubes according to the present invention made using such polymers can accordingly be operated up to about 360° C. For preferred performance the composite tubes according to the present invention are preferably operated below the glass transition temperature, $T_g$, of the polymers. For typical high melting point polymers, such as polyaryletherketones, $T_g$ is typically in the range 150° C-260° C.

The use of thermoplastic polymer based composites rather than thermosetting polymer based composites is preferred for many applications for a variety of reasons. In particular thermoplastic polymer based composites may be postformed, that is once consolidated they may be reheated above the melting temperature of the thermoplastic and deformed to change the shape of the composite. This allows the composites to be made in shapes that are easy to manufacture and/or store and/or transport, the shapes being postformed later to the shape required for operation. For example thermoplastic composites may be made as straight tubes and postformed into bent tubes as may be required, for example, for a stabiliser for a vehicle or for a strengthening stringer on an aircraft. Also thermoplastics may be used which have high tensile and bending strength, high toughness, rain erosion resistance and abrasion resistance. Furthermore thermoplastic materials are typically easier to handle and fabricate into composite structures than thermosetting materials since at manufacturing temperatures the surface of a thermosetting material tends to be "tacky, while that of a thermoplastic material is "dry".

The fibres of the fibre reinforcement of the coupling member are preferably provided by a fabric layer, especially preferably by a braid. Other fabric constructions, for example, weaves or knits may also be used. The fibres of the fabric may be provided as single fibres, or in bundles of fibres commonly known as "tows". As other examples the fibre reinforcement may be provided by short lengths of fibres, for example as short chopped fibres or staple fibres, or by filament wound fibres.

The material of the fibre reinforcement is preferably compatible with the polymeric material, and the fibre reinforcement is preferably incorporated in the polymeric material at a sufficiently high density to provide structural strength to the coupling. As examples of fibres that may be used there may be mentioned carbon, glass, boron, and silica fibre, natural fibres such as cotton, organic fibres such as nylon polyesters and polyamides, and metallic fibres such as stainless steel and aluminium. A single type of fibre may be used or a combination of different types of fibre. Also where a fibre comprises a bundle of filaments in a so-called 'tow' or 'roving' the filaments in each tow or roving may be the same or different. Thus for example a mixed tow may comprise a bundle of both organic and inorganic filaments. As examples, in some embodiments, it is preferred for at least some of the fibres to be metal, for example where the joint between the substrates to be electromagnetically shielded. In other embodiments it is preferred to incorporate some conductive fibres, for example metal or conductive polymeric fibres to enable an electrical current to be passed through the coupler.

The softening temperature of the fibres of the fibre reinforcement is preferably greater than the softening temperature of the polymeric material. The difference between the softening temperatures is preferably in the range 5 to 50°C, more preferably 15 to 35°C, especially preferably about 20°C.

The fibre reinforcement and the polymeric material of the coupling member may be provided in a variety of substantially unconsolidated arrangements, by which is meant that the individual fibres, or groups of individual fibres (especially tows), are not joined together by the polymeric material to any significant extent. Consolidation causes the polymeric material to spread out and join the fibres together. In one embodiment a fibre reinforcement and the polymeric material are provided as discrete layers. Thus, for example a coupler according to the invention may comprise an outer driver, an inner polymeric layer, and a fibre reinforcement layer, for example a braid sandwiched therebetween. Alternatively the fibre reinforcement and the polymeric layer may be interchanged such that the fibre reinforcement layer is the inner layer.

In a further preferred embodiment where a fibrous layer with its own integrity is used, for example a fabric layer, the polymeric material is provided as a coating or an impregnation of the fibres of the reinforcement. Where a fabric is used the fibres may be coated or impregnated with polymeric material before they are made into a fabric, or the fabric may be made first and then the finished fabric coated or impregnated with the polymeric material. It is especially preferable and convenient to manufacture the fabric from commercially available, so-called "prepreg" (pre-impregnated) fibres or tows.

It is especially preferred to use a braid in which the fibres or filaments making up the braid have been precoated and/or pre-impregnated with a polymeric material having a sufficiently high softening temperature so that when the assembly is heated to recover the driver the surface of the fibres is not "tacky" and thus the fibres are free to slide over each other. In particular at the cross-over points of the braid the fibres are free to slide relative to each other and it is preferable that the fibres have minimal adhesion to the recovering driver. This enables the braid to change its braid angle during the recovery of the driver which change in braid angle enables the braid to conform to the shape of the recovering driver. The method of change of shape of the braid by a change in braid angle is particularly preferred since it means that the fibres which make up the braid remain straight and no wrinkling of the fibres, which tends to weaken the resulting composite, is required in order to accommodate the shape change. Preferably, the softening temperature of the polymer is not significantly higher than the recovery temperature of the driver, such that further heating of the assembly softens the polymer allowing the composite to consolidate under the action of the recovering driver. Preferably however the softening temperature is sufficiently high to allow some tolerance in the application of heat while still preventing premature softening which would prevent slippage at the braid angle cross-over points. Preferably the difference in temperature between the softening temperature of the polymer and the recovery temperature of the driver is in the range 5 to 50°C, more preferably in the range 15 to 35°C, especially preferably about 20°C.

If a two or more component coating, for example two or more layer coating is applied to the fibres, the above stated criteria for the softening temperature of the polymeric fibre apply to the outer coating only.

The polymer material for the coupling member may be selected according to the requirements from known compounds. As stated above, particularly where high structural strength is required, it is preferred to use a polymeric material having a viscosity, at the consolidation temperature, higher than 2500 Poise, preferably higher than 5000 Poise, more preferably higher than 10000 Poise, especially preferably higher than 20000 Poise.

Examples of two especially preferred combinations of fibre reinforcement and polymeric material that may be used for the coupling member are glass fibre or carbon fibre with either nylon or polyaryletherketone.

Where the fibres are pre-impregnated or pre-coated, a single type of impregnation/coating may be used on all of the fibres or a different type of impregnation/coating may be used on different fibres.

Where a curable polymeric material is used, first and second curable components may be provided as coatings or impregnations on different fibres or as overlying coatings on a single fibre. As examples, there may be used in the present invention the curable components and the fibres and fabrics described in U.K. Patent Application Publication No. 2135673, 2139227 and 2139228, and European Published Application No. 0117738. These however, tend to be somewhat more soft and tacky during driver recovery than the preferred free-sliding materials hereinbefore mentioned.

Turning now to the driver, this may take many forms. In a preferred embodiment the driver is tubular, having two open ends, and is, preferably generally cylindrical. As other examples, the driver may be in the form of a so called "wraparound" sleeve, that is in the form of a flat sheet that is wrapped around or within the coupling member, opposed edges of the sheet being held together by a closure member, or the driver may be in the form of a tape, or a single fibre or a wire that is helically wrapped around or within the coupling member or in the form of a fabric for example a woven or braided member.

The form and the material of the recoverable driver, must be selected such that the recovery force is sufficient to consolidate the polymer of the fibre reinforced member. Preferably the material of the driver is polymeric. Thus, for example a heat recoverable polymeric tubular driver may be used, or a heat-recoverable polymeric, spirally wrapped fibre.

It was expected that as the viscosity of the polymeric material to be consolidated increased, the force required to effect consolidation would increase correspondingly. However it has suprisingly been found that unexpectedly low recovery forces are required to consolidate polymeric materials of high viscosity. Thus for example to consolidate a fibre reinforced polyaryletherketone tube recovery stresses of the order of 0.5-0.6 MPa (50 to 60 N (corresponding to 5 to 6 Kg)/cm$^2$) are required. This is compared with the value of 0.2 MPa (2 Kg/cm$^2$), preferably 0.5 MPa (5 Kg/cm$^2$) described in JP-A-81133137, referred to above, to make an epoxy resin composite. Thus a first polyaryletherketone which has a viscosity of about 4-5000 Poise at the recovery temperature of a second polyaryletherketone used as a driver for the first polyaryletherketone, can be consolidated by a force only slightly larger than used for an epoxy resin which has a viscosity five or six times lower, in the range of 800 to 1000 Poise.

Consolidation of the composite tube and bonding of the coupling member to the substrates is achieved by first heating the polymer sufficiently to allow it to flow under the influence of the recovering driver into the interstices between the fibres, and then allowing the tube to cool.

The temperature to which the article must be heated to effect the consolidation depends on the materials of both the fibre reinforced polymer and the driver. In general as the temperature rises the viscosity of the polymer decreases so that it can flow more readily. On the other hand as the temperature rises the recovery force of the recoverable driver decreases for most recoverable drivers. Thus an appropriate combination of driver and coupling member must be selected which counterbalances the decrease in viscosity (which enhances consolidation) and the decrease in recovery force (which detracts from consolidation). Also, where a thermoplastic is used, the temperature of consolidation must be well above the temperature of operation of the consolidated tube, otherwise the thermoplastic polymer will remelt during operation.

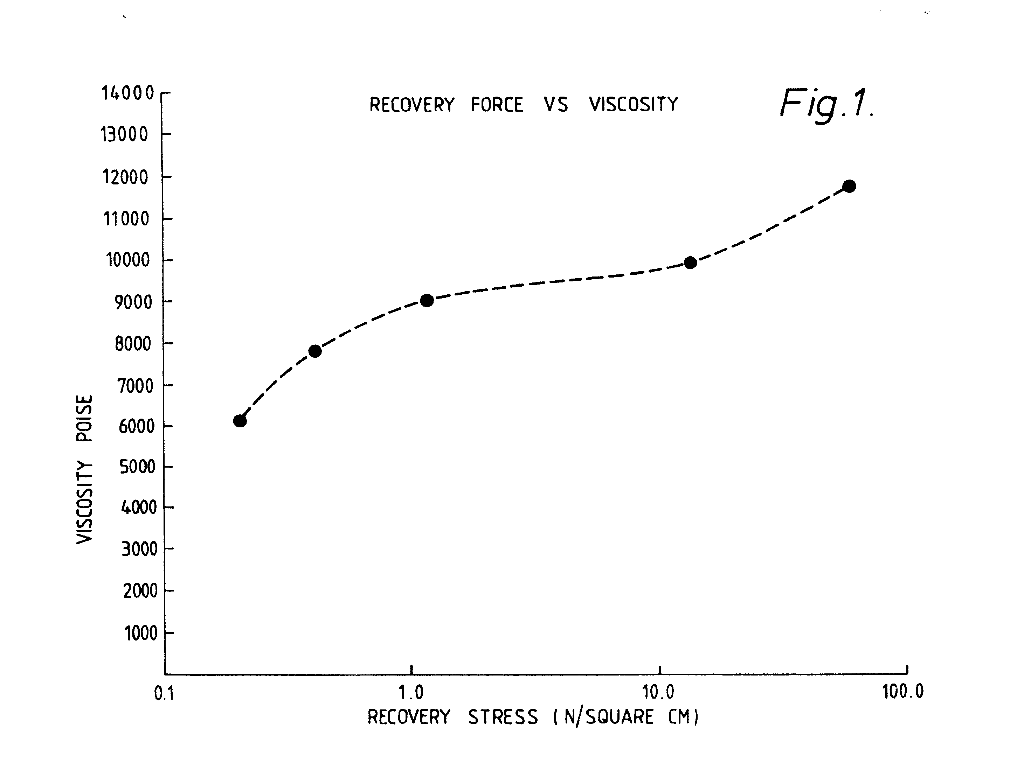

Selection of an appropriate driver and coupling member polymeric material may be made with reference to the graph in Figure 1 of the accompanying drawings. This shows the recovery force needed to consolidate the coupling member as a function of the viscosity of the polymeric material of that member. Thus given the viscosity of a polymer at or just above its melting point, the recovery force of the driver needed to effect consolidation at that temperature may be read from the graph. If it is desired to use a driver with a lower recovery force than that required at the melting point of the polymer, it is necessary simply to increase the temperature further above the melting point of the polymer until the viscosity of the polymer is reduced to the value indicated by the graph which can be consolidated by the desired lower recovery force. The graph of Figure 1 was calculated using the following procedure:

1. The recovery stress of five heat shrinkable drivers were measured at 200, 220, 235, 250, 300 and 350°C. Two spirally wrapped fibre drivers were used, viz spirally wrapped polyester fibre, and drawn polyaryletherketone fibre, and three tubular drivers viz polyvinylidene fluoride tubing, nylon tubing and a silicone elastomer tubing.

(a) For the spirally wound fibres, the recovery stress of a straight fibre was measured by clamping a single fibre between the jaws of an Instron Tensile Testing Instrument at the required temperature and monitoring the recovery force exerted, and the recovery force of a spirally wound fibre was then calculated, given the value for the straight fibre.

(b) For the tubular drivers, the recovery stress was measured by recovering the tube over a split mandrel held in an Instron Tensile Testing Instrument at the required temperature and monitoring the force exerted.

2. The viscosity of several thermoplastic materials (including nylon 6) were measured in the temperature range ambient to 350°C using a Rheometric Dynamic Spectrometer.

3. Consolidation of a braid of glass fibre tows impregnated with nylon 6 was carried out in a laboratory oven on a stainless steel mandrel between the temperature range of 200°C to 350°C. The temperature at which consolidation took place was noted, consolidation being measured visually, microscopically and by noting the differences in the densities of the braided material.

4. The results are set out in Table I.

5. The results set out in the table determine the temperature at which consolidation takes place for each driver. (1) above gives the recovery force of that driver at the observed consolidation temperature, and (2) above gives the viscosity of the thermoplastic being consolidated at the observed consolidation temperature. Thus graph of Figure 1 can be constructed. The five points plotted on the graph are generated, reading left to right, by the polyvinylidene fluoride tubing, nylon fibre, silicone tubing, polyester fibre, and the polyaryletherketone fibre respectively.

TABLE I

| Driver | Temperature °C | | | | | |
|---|---|---|---|---|---|---|
| | 200 | 220 | 235 | 250 | 300 | 350 |
| Polyester spirally wrapped fibre | X | X | SL | GOOD | - | - |
| Polyvinylidene fluoride tubing | X | X | X | SL | GOOD | - |
| Nylon tubing | X | X | X | SL | GOOD | - |
| Silicone elastomer tubing | X | X | X | SL | SL | GOOD |
| Polyaryletherketone spirally wrapped fibre | X | SL | GOOD | GOOD | GOOD | GOOD |
| nylon impregnated glass fibre braid | " | " | " | " | | |
| " | " | " | " | " | | |
| " | " | " | " | " | | |
| " | " | " | " | " | | |

SL = Slight consolidation
GOOD " = GOOD
X " = NO
- " = No measurements made

A particularly preferred group of materials which have a high recovery temperature and appreciable recovery force even at high temperatures, and which can accordingly be used in combination with a polymer having high viscosity at ambient temperatures and therefore need to be heated to high temperatures to cause them to flow, are polyaryletherketones. Polyaryletherketones (or polyarylene ether ketones) are now widely known, having been described in numerous publications, for example published European Patent Application No. 124276, and are thought not to require further detailed description herein.

A particularly preferred article according to the present invention comprises a fibre reinforced layer comprising a braid of carbon fibre tows impregnated with polyaryletherketone of lower Tg in combination with a spirally wound driver of a polyaryletherketone monofilament of higher Tg. Polyaryletherketone impregnation which starts to flow at about 340°C can be used with a polyaryletherketone driver which has a sufficiently high recovery force at that temperature to consolidate the braid. For example, the impregnation polymer may comprise the repeat unit -aryl-ether-aryl-ether-aryl-ketone-and the driver polymer the repeat unit -aryl-ether-aryl-ketone.

The recovering driver not only effects consolidation of the composite tube but also enhances bonding of the coupling member to the substrates by applying a force to the bond interface. The bonding achieved depends on the substrates to which the coupling is applied. As examples bonding may be, for example by adhesion, or by fusion. For an adhesive bond the polymeric material of the coupling member itself may act as an adhesive on the substrate or a separate adhesive may be used (as described below). Adhesive bonding may be used for example, for bonding to a metal substrate. By a fusion bond is meant a bond wherein the polymeric material of the coupling member, (or of any additional lining layer between the coupling member and the substrate) and the material of the substrate flow together to form a homogenous bridge between the parts with no discernable interface therebetween. Fusion bonding might be used for example for bonding to a polymeric substrate.

Where the polymeric material comprises curable components, it is believed that there is a synergestic effect between the recoverable driver and the curing components. Thus it is believed that the recoverable driver not only urges the two components into physical contact with each other, but also enhances curing. Thus when the heat-recoverable driver is recovered onto components the curing will be sooner than if it is heated on its own to the same temperature, or it will cure at a significantly lower temperature than it will when heated on its own.

The synergistic increase in the rate of curing of certain components when used in conjunction with a recoverable article is most pronounced when the fusion temperature of the components is in the region of the recovery temperature of the cover or the temperature to which the components are heated when the cover is recovered. Preferably the fusion temperature is not more than 50°C, especially not more than 30°C and most especially not more than 10°C above the recovery temperatureof the article. Also preferably, not more than one, and especially none, of the components has a fusion temperature of less than 50°C. Each of the components preferably has a fusion temperature in the range of 70 to 120°C and most preferably from 70 to 100°C, and, instead or in addition, each has a fusion temperature that differs from the fusion temperature of the or each other reactive component by not more than 30°C.

After consolidation of the coupling member the driver may or may not be retained. Where lack of space is a problem, and, or where low weight is important it is preferred to discard the driver. For other applications, the extra step of discarding the driver may be unnecessary. Indeed for some applications retention of the driver is a positive advantage since, for example, it provides additional burst strength to the coupling.

For some applications it is preferred to include a liner between the coupling member and the substrates to be coupled. For example, although the polymeric material of the coupling member may itself act as an adhesive to bond the coupling member to the substrates, for some applications it is preferred to include an additional adhesive or sealant as a liner, either to improve the bond to the substrates or to improve the environmental sealing of the coupled substrates, or both. The adhesive or sealant liner may comprise the same material as the polymeric material of the coupling member, to enhance bonding between the liner and the coupling member. As examples of adhesives and sealants that may be used there may be mentioned hot melt adhesives such as low molecular weight polyamides and that class of thermoplastic materials known as nylons. Applications where it is preferred to include a separate adhesive or sealant liner include applications where a high strength either burst or pull out strength, is required of the couplings. In such cases it is preferred to use a coupling member that has a high fibre density. The coupling member consequently has a low polymer density and the quantity of polymer in the coupling member may therefore be insufficient both to consolidate the tube and to flow to bond and to seal to the substrates, making it preferable to include an additional adhesive or sealant liner. The adhesive or sealant liner is preferably tubular.

In another embodiment it is preferred to include an impermeable layer, for example a (preferably substantially non-crosslinked) polyvinylidene fluoride layer or a metal layer for example of aluminium foil, between the coupling member and the substrates. It is believed that the impermeable layer acts to spread out any pressure acting on the coupling member over its entire surface, thus minimising the possibility of localised failure of the coupling member, and hence improving the strength, particularly the burst strength of the coupling member.

The liners described above may be used alone, or in combination. Indeed where an impermeable layer is used which is not itself bondable directly to the substrates, an additional adhesive layer may also be included.

A single liner may be used, or a plurality of shorter liners. For example, two tubular liners may be included, one at each end of the coupling member.

Where a single liner is used it is preferably shorter in length than the coupling member, and positioned such that a length of coupling member projects at either end thereof. With this arrangement the direct bonding of the coupling member to the substrate at each end of the arrangement prevents the substrates pulling apart from each other, which they might tend to do if the liner were coterminous with the coupling member.

A particularly preferred embodiment comprises an outer glass fibre/nylon impregnated coupling member, with a lining layer of polyvinylidene fluoride, coated with a hot melt polyamide adhesive, the liner being shorter than the coupling member.

Couplers according to the present invention may advantageously be made having very high performance, in particular having good tensile strength, burst strength and pull out strength and also good sealing against fluids having a high diffusion coefficient, which are typically difficult to seal, for example, Freon (Trade Mark). The couplers are therefore particularly suitable as pressure retaining couplers for fluid carrying pipes for example for coupling refrigeration pipes and fuel line pipes, particularly aviation fuel-line pipes where a low weight is important, and also for joining water pipes and central heating pipes. The coupler may also, advantageously, be used to join pipes of dissimilar material. Advantageously the coupling may be made sufficiently strong that the contiguous end portions of the pipes may be joined in an end to end butt joint, or in a relatively loose (and therefore easily formed) swaged joint, thus avoiding the precise close-fitting swaging of the pipes generally required with prior art couplers to achieve a strong coupling. Clearly, the methods and assemblies of the present invention may be applied to coupling contiguous substrates, especially contiguous end portions of the substrates, in other, not necessarily abutting, arrangements.

Consolidation of a fibre reinforced tube of polymeric material having viscosity greater than 2500 Poise is also new per se, and thus a method of consolidation in the absence of a permanent underlying substrate also forms part of the present invention. Thus a third aspect of the present invention provides a method of forming a composite tubular member comprising i) providing a heat recoverable driver and a tubular member telescoped therewith, the tubular member comprising fibre reinforcement and polymeric material ii) positioning the telescoped members around an inner forming-mandrel and iii) heating the telescoped members to cause the driver to recover to urge the tubular member into contact with the mandrel and to consolidate the first tubular member, the polymeric material having a viscosity of at least 2500 Poise, preferably 3000 Poise at the temperature at which consolidation takes place.

After recovery the driver, or the mandrel, or both, may be discarded. The fibre reinforced tube manufactured by the method according to the third aspect of the present invention may be used, for example, as a structural member, or for example as a coupler.

Where the polymeric material is a thermoplastic material, the tube made according to the present inventionmay be incorporated into a recoverable assembly, by reheating the tube above the softening point of the thermoplastic, positioning a recoverable driver within or around the tube, and recovering the driver to deform the softened composite tube. The driver that was used in the manufacture of the composite tube may be used for this purpose (provided it has some residual recovery after manufacture of the tube) or a new driver may be used. Thus the composite tube made according to the third aspect of the present invention may be used in a recoverable assembly, for example as a coupler.

The invention also includes an assembly wherein the driver has been recovered to form a consolidated article, the polymeric material has been subsequently cross-linked, and the consolidated article has been deformed so as to render the consolidated article heat-recoverable.

Embodiments of the present invention will now be described, by way of example, with reference to the accompanying drawings, wherein:

Figure 1 is a graph, as described above, showing the variation in recovery force of the driver required for consolidation of the coupling member as a function of the viscosity of the polymeric material of the coupling member;

Figure 2 is a perspective view of a coupler according to the invention positioned ready for coupling two abutting pipes;

Figures 3(a) to (c) are sectional views of different embodiments of coupler according to the invention;and

Figure 4 shows the coupling member of the coupler of Figure 3 (c) installed on two abutting pipes.

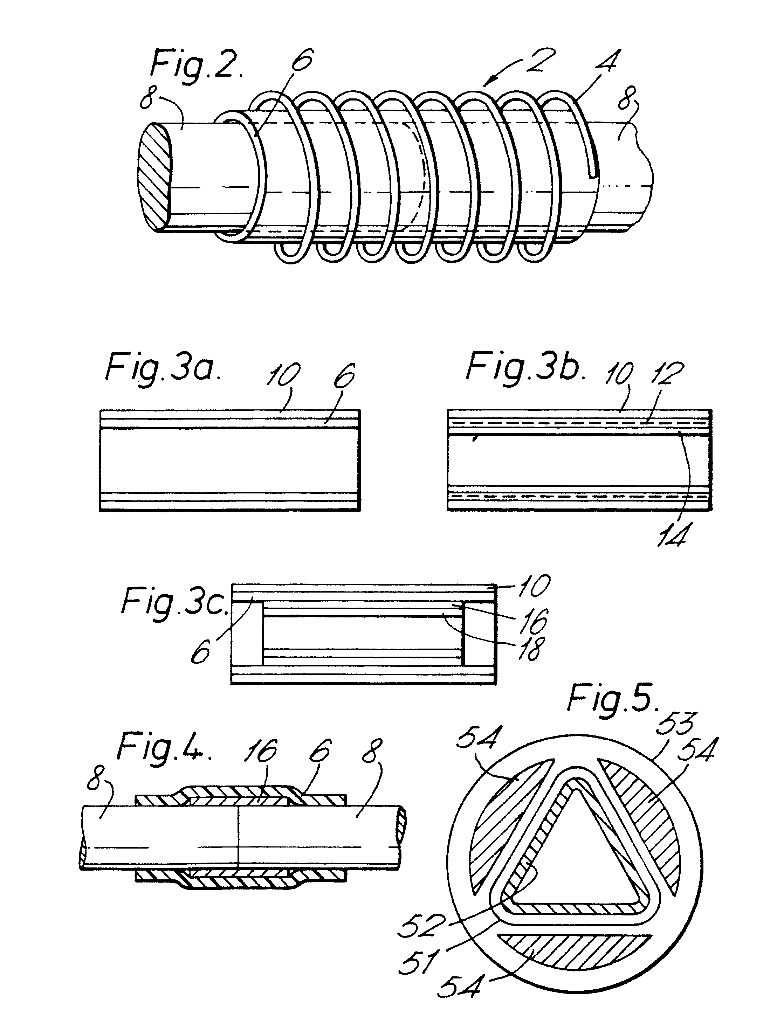

Referring to the drawings, Figure 2 shows a coupler 2 comprising a driver 4 in the form of a helically wound heat recoverable polyarylene either ketone fibre, and a tubular coupling member 6 comprising a braid made from glass fibre preimpregnated with Nylon 6. The coupler 2 is positioned around, and is a loose fit around, abutting ends of pipes 8.

Figure 3 shows alternative embodiments of coupler according to the present invention the outer driver (10) is identical in each case and comprises a heat recoverable polyolefin. The inner coupling member (6) in Figure (3a) is identical to that of Figure 2. The inner coupling member in Figure 3b comprises a separate glass fibre braid (12) and nylon polymeric layer (14). The inner coupling member (6) of Figure (3c) is identical of Figures 2 and (3a). An inner liner (16,18) is, however, included. The inner liner comprises polyvinylidene fluoride (16) and a layer (18) of hot melt adhesive coated on the polyvinylidene liner to bond it to the substrate. The liner extends only part way along the coupler and provides additional strength to the coupler in particular improved burst strength.

The installation of any of the couplers shown in Figures 2 and 3 is effected by heating the coupler causing the driver (4,10) to recover and the polymeric material of the coupling member to flow into the interstices between the fibres and thus consolidate. The recovering driver exerts a pressure on the polymeric material enhancing the consolidation. Also the recovering driver causes the braid to change its braid angle and conform to the underlying substrate and by exerting pressure of the substrate enhance the bond to the substrate.

Figure 4 shows the coupler of Figure 3c coupling two pipes. The coupling member (6) has conformed to the underlying pipes and consolidated. Also the adhesive layer (18) and the nylon of the coupling member 6 has flowed to bond the coupler to the substrate. The driver 10 has been discarded.

Figure 5 shows in schematic end view a further ingenious aspect of the invention in which a fibre reinforcing member 51 carrying polymeric material suitable for consolidation is positioned around a sharp-cornered substrate 52 (triangular by way of example). In order to consolidate the structure reasonably uniformly upon recovery of the tubular driver 53, suitably shaped filler pieces 54 are positioned to spread the recovery forces more evenly over the circumference of the reinforcing member and substrate, avoiding the concentration of consolidation at the corners which would otherwise occur. Differently shaped filler pieces may readily be devised to suit other sharp-cornered or irregular substrates, the term "sharp-cornered" implying only that the substrate has a shape which would localise or concentrate the consolidation to an undesirable degree, without limitation to any specific shape or degree of sharpness or regularity. Preferably the filler pieces will be shaped to provide a substantially smoothly convex substantially continuous outer surface, more preferably a surface of substantially ovoid or substantially circular cross-section, on which the recovering driver will bear. The filler pieces and/or the driver may or may not be removed after the consolidation. This aspect of the invention accordingly provides a method or assembly wherein there is provided at least one filler piece shaped so that when placed in use between the driver and the coupling means or braid when positioned around a sharp-cornered or irregular substrate, the filler piece spreads the driver recovery forces more evenly over the coupling means so as to increase the uniformity of the consolidation. Also provided is a kit of parts for coupling or reinforcing elongate objects, comprising a heat-recoverable driver, coupling means comprising fibre reinforcement and a polymeric material capable of flowing and consolidating with the fibre reinforcement when the driver is heated to recover it around the coupling means surrounding the said object(s), and at least one filler piece shaped so that, when placed in use between the driver and the coupling means when positioned around a sharp-cornered or irregular elongate object, the filler piece spreads the driver recovery forces more evenly over the coupling means so as to increase the uniformity of the consolidation.

In kits according to the invention it is preferred that the driver and/or the coupling means or braid is or are in tubular form, although flat or open forms which can be wrapped around the objects in question are also possible. The liner, if present, may be pre-assembled with the coupling means or braid, or the coupling means or braid may be pre-assembled with the driver.

Apart from couplings, especially pipe couplings, the methods, kits and assemblies of the present invention may be especially useful when consolidated about a tubular load-bearing structural member to reinforce the structural member over a substantial part of its length or when consolidated about a fibrous covering surrounding a tubular member to provide an outer layer thereon which is substantially impervious to fluid with which the fibrous covering might otherwise come into contact in use. For example, reinforcement of structural tubular alloy members such as wing struts in microlight aircraft with up to four layers of glass fibre/polyamide consolidated by recovery thereover of a polyvinylidene fluoride driver (subsequently removed) may increase the load to bend of the structural members by up to 33% with minimal increase in weight. As another example, fibrous heat insulation around hot air ducts in aircraft can be rendered impervious to aricraft fuel by application of a suitably formulated consolidated composite according to this invention over the insulation. Square tubular wave guides can be reinforced by consolidation thereon of a fibre/polymer composite using suitably shaped filler pieces according to this invention.

A preferred form of refrigerator pipe coupling can be formed by abraiding and degreasing the pipe ends and (preferably loosely) swaging one inside the other, positioning around the swaged joint a liner of substantially non-cross-linked polyvinylidene fluoride and three layers of glass fibre braid carrying polyamide (Nylon Trade Mark), and recovering thereover a tubular driver of heat-recoverable polymer preferably cross-linked Nylon 12 (Trade Mark), to consolidate the glass/polyamide composite. Three layers of the glass/polyamide are used to ensure substantially 100% surface coverage.

The coupling means or braid, and/or the liner if present, may comprise curable polymeric material.

## Claims

1. A method of coupling two substrates comprising (a) positioning around contiguous portions of the substrates, or within the contiguous portions if hollow, a coupling assembly comprising a heat recoverable tubular driver and telescoped with the driver tubular coupling means comprising substantially unconsolidated fibre braid reinforcement and heat-flowable polymeric material (by which is meant that the individual fibres, or groups of individual fibres are not joined together by the polymeric material to any significant extent), and (b) applying heat to recover the driver and to cause the polymeric material to flow such that the recovering driver consolidates the coupling means thereby coupling the substrates together, wherein the polymeric material has a sufficiently high softening temperature so that when the heat is applied to recover the driver the braid is caused to change its braid angle by slippage of the braid fibres at their cross-over points to conform to the shape of the recovering driver before further heating causes the polymeric material to flow such that the recovering driver consolidates the coupling means.

2. A method according to claim 1, wherein abutting ends of the substrates are coupled together in an end-to-end butt joint.

3. A method according to claim 1, wherein at least one of the substrates has a hollow end and the end of the other substrate is positioned within the hollow end.

4. An assembly for forming a composite article comprising a heat recoverable driver telescoped together with a braid coupling means made from fibres which have been pre-coated or pre-impregnated with a polymeric material, which polymeric material has a sufficiently high softening temperature so that when the assembly is heated to recover the driver, the braid is caused to change its braid angle by slippage of the braid fibres at their cross-over points to conform to the shape of the recovering driver, and then on further heating the polymeric material is caused to flow and consolidate the braid to form the composite article.

5. A method according to any of claims 1 to 3, wherein the consolidated coupling means alone is capable of coupling the elongate objects after removal of the recovered driver, the flowable polymeric material being substantially solid at least at the intended operating temperature of the consolidated coupling means.

6. An assembly according to claim 4, wherein the said polymeric material is substantially solid at least at the intended operating temperature of the consolidated coupling means.

7. An assembly according to claim 4 or 6, wherein the driver on recovery recovers with a stress in the range 0.5 to 0.6 MPa (50 to 60 N/cm$^2$).

8. An assembly according to any of claims 4, 6 and 7, wherein the said polymeric material of the coupling means has a viscosity of at least 2500 Poise, preferably at least 3000 Poise, at the temperature at which the consolidation is to take place.

9. An assembly according to any of claims 4 and 6 to 8, wherein the coupling means comprises carbon fibre impregnated or coated with an aromatic polymer, preferably a polyaryletherketone.

10

10. An assembly according to any of claims 4 and 6 to 9, wherein the coupling means comprises glass fibre impregnated or coated with a polyamide.

11. An assembly according to any of claims 4 and 6 to 10, wherein the driver comprises a polyaryletherketone.

12. An assembly according to any of claims 4 and 6 to 10, wherein the driver comprises cross-linked polyvinylidene fluoride or cross-linked polyamide.

13. An assembly according to any of claims 4 and 6 to 12, wherein a liner of substantially impermeable material is positioned such that it can be sandwiched in use between the coupling means and a substrate about which the coupling means is to be consolidated in use.

14. An assembly according to claim 13, wherein the liner extends only part way along the length of the coupling means.

15. An assembly according to claim 13 or 14, wherein the liner comprises substantially non-crosslinked polyvinylidene fluoride.

16. An assembly according to claim 13, 14 or 15, wherein the liner is coated with a layer of adhesive on the surface which will face the substrate in use.

17. An assembly according to any of cliams 4 and 6 to 16 wherein the driver has been recovered to form a consolidated article, the polymeric material has been subsequently cross-linked, and the consolidated article has been deformed so as to render the consolidated article heat-recoverable.

18. A method according to any of claims 1 to 3 and 5, wherein at least one filler piece is placed between the driver and the coupling means when positioned around a sharp-cornered or irregular substrate, the filler piece being shaped so that it spreads the driver recovery forces more evenly over the surface of the substrate so as to increase the uniformity of the consolidation.

19. A method according to claim 18, wherein the filler piece(s) is (are) shaped to provide a substantially smoothly convex substantially continuous outer surface on which the recovering driver will bear.

20. An assembly according to any of claims 4 and 6 to 17, when used to couple together two substrates, preferably two pipes.

21. An assembly according to any of claims 4 and 6 to 17, when to used to couple together two refrigerator pipes.

22. An assembly according to any of claims 4 and 6 to 17, when consolidated about a tubular load-bearing structural member to reinforce the structual member over a substantial part of its length.

23. An assembly according to any of claims 4 and 6 to 17 when consolidated about a fibrous covering surrounding a tubular member to provide an outer layer thereon which is substantially impervious to fluid with which the fibrous covering might otherwise come into contact in use.

24. A kit of unassembled or only partly assembled parts for pipe coupling comprising a heat-recoverable driver, coupling means comprising substantially unconsolidated fibre braid reinforcement and a heat-flowable polymeric material (by which is meant that the individual fibres or groups of individual fibres are not joined together by the polymeric material to any significant extent), and a liner of substantially impervious material for the coupling means, the coupling means and liner being arrangable in use around the contiguous ends of the pipes to be coupled, and the driver being arrangable around the coupling means so that heat can be applied to cause recovery of the driver and to cause the flowable polymeric material to flow such that the recovering driver will consolidate the coupling means and thereby couple the pipes together, wherein the polymeric material has a sufficiently high softening temperature so that when the heat is applied to recover the driver the braid is caused to change its braid angle by slippage of the braid fibres at their cross-over points to conform to the shape of the recovering driver before further heating causes the polymeric material to flow such that the recovering driver consolidates the coupling means.

25. A kit according to claim 24, wherein the liner is pre-assembled with the coupling means.

26. A kit according to claim 24 or 25, wherein the liner is as specified in any of claims 13 to 16.

27. A kit according to claim 24, 25 or 26, additionally comprising at least one filler piece shaped so that, when placed in use between the driver and the coupling means when positioned around a sharp-cornered or irregular elongate object, the filler piece spreads the driver recovery forces more evenly over the surface of the substrate so as to increase the uniformity of the consolidation.

28. A kit according to any of claims 24 to 27 wherein the driver and/or the coupling means is or are in tubular form.

29. A kit according to any of claims 24 to 28, wherein the coupling means is pre-assembled with the driver.

30. A kit according to any of claims 24 to 29, wherein the driver and/or the coupling means is or are as specified in any of claims 7 to 16.


## Revendications

1. Procédé de couplage de deux substrats, consistant (a) à positionner autour de parties contiguës des substrats, ou bien à l'intérieur des parties contiguës si ces substrats sont creux, un assemblage de couplage comprenant un élément tubulaire d'entraînement, doué de reprise dimensionnelle à chaud, et, télescopés avec l'élément d'entraînement, des moyens tubulaires de couplage consistant en un renforcement par une tresse de fibres pratiquement non consolidée, et une matière polymérique apte à l'écoulement à chaud (ce qui signifie que les fibres distinctes ou groupes de fibres distinctes ne sont pas joints les uns aux autres par la matière polymérique à un degré notable quelconque), et (b) à effectuer un chauffage pour provoquer la reprise dimensionnelle de l'élément d'entraînement et l'écoulement de la matière polymérique de sorte que l'élément d'entraînement subissant une reprise dimensionnelle consolide les moyens de couplage, provoquant ainsi le couplage des substrats l'un à l'autre, dans lequel la matière polymérique possède une température de ramollissement suffisamment élevée pour que, lorsqu'un chauffage est effectué pour provoquer la reprise dimensionnelle de l'élément d'entraînement, la tresse soit amenée à modifier son angle de tressage par glissement des fibres de tresse à leurs points de chevauchement pour s'adapter à la forme de l'élément d'entraînement subissant une reprise dimensionnelle, avant qu'un chauffage supplémentaire provoque l'écoulement de la matière polymérique de sorte que l'élément d'entraînement subissant une reprise dimensionnelle consolide les moyens de couplage.

2. Procédé suivant la revendication 1, dans lequel des extrémités bout à bout des substrats sont couplées l'une à l'autre suivant une jonction bout à bout.

3. Procédé suivant la revendication 1, dans lequel au moins l'un des substrats possède une extrémité creuse et l'extrémité de l'autre substrat est positionnée à l'intérieur de l'extrémité creuse.

4. Assemblage pour la formation d'un article composite, comprenant un élément d'entraînement doué de reprise dimensionnelle à chaud télescopé conjointement avec des moyens de couplage sous forme de tresse constituée de fibres qui ont été revêtues préalablement ou préimprégnées avec une matière polymérique, matière polymérique qui possède une température de ramollissement suffisamment élevée pour que, lorsque l'assemblage est chauffé pour provoquer la reprise dimensionnelle de l'élément d'entraînement, la tresse soit amenée à modifier son angle de tressage par glissement des fibres de tresse à leurs points de chevauchement pour s'adapter à la forme de l'élément d'entraînement subissant une reprise dimensionnelle, puis, par un chauffage supplémentaire, la matière polymérique soit amenée à s'écouler et consolider la tresse pour former l'article composite.

5. Procédé suivant l'une quelconque des revendications 1 à 3 dans lequel les moyens de couplage consolidés seuls sont capables de coupler les objets allongés après élimination de l'élément d'entraînement ayant subi une reprise dimensionnelle, la matière polymérique apte à l'écoulement étant pratiquement solide au moins à la température d'utilisation envisagée des moyens de couplage consolidés.

6. Assemblage suivant la revendication 4, dans lequel la matière polymérique est pratiquement solide au moins à la température d'utilisation envisagée des moyens de couplage consolidés.

7. Assemblage suivant la revendication 4 ou 6, dans lequel l'élément d'entraînement, lors de la reprise dimensionnelle, présente une reprise dimensionnelle avec une tension comprise dans l'intervalle de 0,5 à 0,6 MPa (50 à 60 N/cm$^2$).

8. Assemblage suivant l'une quelconque des revendications 4, 6 et 7, dans lequel la matière polymérique des moyens de couplage possède une viscosité d'au moins 2500 poises, de préférence d'au moins 3000 poises, à la température à laquelle la consolidation doit s'effectuer.

9. Assemblage suivant l'une quelconque des revendications 4 et 6 à 8, dans lequel les moyens de couplage consistent en une fibre de carbone imprégnée ou revêtue d'un polymère aromatique, de préférence d'une polyaryléthercétone.

10. Assemblage suivant l'une quelconque des revendications 4 et 6 à 9, dans lequel les moyens de couplage consistent en une fibre de verre imprégnée ou revêtue d'un polyamide.

11. Assemblage suivant l'une quelconque des revendications 4 et 6 à 10, dans lequel l'élément d'entraînement comprend une polyaryléthercétone.

12. Assemblage suivant l'une quelconque des revendications 4 et 6 à 10, dans lequel l'élément d'entraînement comprend un polyfluorure de vinylidène réticulé ou un polyamide réticulé.

13. Assemblage suivant l'une quelconque des revendications 4 et 6 à 12, dans lequel une chemise d'une matière pratiquement imperméable est positionnée de sorte qu'elle puisse être intercalée lors de l'utilisation entre les moyens de couplage et un substrat autour duquel les moyens de couplage doivent être consolidés lors de l'utilisation.

14. Assemblage suivant la revendication 13, dans lequel la chemise s'étend seulement sur une partie de la longueur des moyens de couplage.

15. Assemblage suivant la revendication 13 ou 14, dans lequel la chemise comprend un polyfluorure de vinylidène pratiquement non réticulé.

16. Assemblage suivant la revendication 13, 14 ou 15, dans lequel la chemise est revêtue d'une couche d'un adhésif sur la surface qui est tournée vers le substrat lors de l'utilisation.

17. Assemblage suivant l'une quelconque des revendications 4 et 6 à 16, dans lequel l'élément d'entraînement a été soumis à une reprise dimensionnelle pour former un article consolidé, la matière polymérique a été ensuite réticulée et l'article consolidé a été déformé de manière à rendre l'article consolidé doué de reprise dimensionnelle à chaud.

18. Procédé suivant l'une quelconque des revendications 1 à 3 et 5, dans lequel au moins une pièce de remplissage est placée entre l'élément d'entraînement et les moyens de couplage lors du positionnement autour d'un substrat anguleux ou irrégulier, la pièce de remplissage étant conformée de sorte qu'elle disperse plus uniformément les forces de reprise dimensionnelle de l'élément d'entraînement sur la surface du substrat de manière à accroître l'uniformité de la consolidation.

19. Procédé suivant la revendication 18, dans lequel la ou les pièces de remplissage sont conformées de manière à fournir une surface extérieure pratiquement continue, d'une convexité pratiquement uniforme, sur laquelle porte l'élément d'entraînement subissant une reprise dimensionnelle.

20. Assemblage suivant l'une quelconque des revendications 4 et 6 à 17, lorsqu'il est utilisé pour coupler ensemble deux substrats, de préférence deux conduits.

21. Assemblage suivant l'une quelconque des revendications 4 et 6 à 17, lorsqu'il est utilisé pour coupler ensemble deux conduits de réfrigérateur.

22. Assemblage suivant l'une quelconque des revendications 4 et 6 à 17, lorsqu'il est consolidé autour d'un élément structural tubulaire porteur de charges pour renforcer l'élément structural sur une partie importante de sa longueur.

23. Assemblage suivant l'une quelconque des revendications 4 et 6 à 17, lorsqu'il est consolidé autour d'une enveloppe fibreuse entourant un élément tubulaire pour produire sur cet élément une couche extérieure qui est pratiquement imperméable à un fluide avec lequel l'enveloppe fibreuse pourrait par ailleurs venir en contact lors de l'utilisation.

24. Kit de pièces non assemblées ou seulement assemblées partiellement pour le couplage de conduits, comprenant un élément d'entraînement doué de reprise dimensionnelle à chaud, des moyens de couplage comprenant un renforcement sous forme d'une tresse de fibres non consolidée et une matière polymérique apte à l'écoulement à chaud (ce qui signifie que les fibres distinctes ou groupes de fibres distinctes ne sont pas joints les uns aux autres par la matière polymérique à un degré notable quelconque) et une chemise d'une matière pratiquement imperméable, destinée aux moyens de couplage, les moyens de couplage et la chemise pouvant être disposés lors de l'utilisation autour des extrémités contiguës des conduits à coupler, et l'élément d'entraînement pouvant être disposé autour des moyens de couplage de sorte qu'un chauffage puisse être effectué pour provoquer la reprise dimensionnelle de l'élément d'entraînement et pour provoquer l'écoulement de la matière polymérique apte à l'écoulement, de sorte que l'élément d'entraînement subissant une reprise dimensionnelle consolide les moyens de couplage et réalise ainsi le couplage des conduits l'un à l'autre, dans lequel la matière polymérique possède une température de ramollissement suffisamment élevée pour que, lorsqu'un chauffage est effectué pour provoquer la reprise dimensionnelle de l'élément d'entraînement, la tresse soit amenée à modifier son angle de tressage par glissement des fibres de tresse à leurs points de chevauchement pour s'adapter à la forme de l'élément d'entraînement subissant une reprise dimensionnelle avant qu'un chauffage supplémentaire provoque l'écoulement de la matière polymérique de sorte que l'élément d'entraînement subissant une reprise dimensionnelle consolide les moyens de couplage.

25. Kit suivant la revendication 24, dans lequel la chemise est préassemblée avec les moyens de couplage.

26. Kit suivant la revendication 24 ou 25, dans lequel la chemise répond à la définition suivant l'une quelconque des revendications 13 à 16.

27. Kit suivant la revendication 24, 25 ou 26, comprenant en outre au moins une pièce de remplissage conformée de sorte que, lorsqu'elle est placée lors de l'utilisation entre l'élément d'entraînement et les moyens de couplage, lors du positionnement autour d'un objet allongé anguleux ou irrégulier, la pièce de remplissage disperse plus uniformément les forces de reprise dimensionnelle de l'élément d'entraînement sur la surface du substrat de manière à accroître l'uniformité de la consolidation.

28. Kit suivant l'une quelconque des revendications 24 à 27, dans lequel l'élément d'entraînement et/ou les moyens de couplage sont sous forme tubulaire.

29. Kit suivant l'une quelconque des revendications 24 à 28, dans lequel les moyens de couplage sont préassemblés avec l'élément d'entraînement.

30. Kit suivant l'une quelconque des revendications 24 à 29, dans lequel l'élément d'entraînement et/ou les moyens de couplage répondent à la définition suivant l'une quelconque des revendications 7 à 16.


**Ansprüche**

14

# EP 0 172 039 B1

1. Verfahren zum Zusammenkoppeln von zwei Trägern, bei dem (a) um benachbarte Abschnitte der Träger oder innerhalb der benachbarten Abschnitte, wenn sie hohl sind, eine Koppelanordnung angebracht wird, die ein unter Wärme erholbares, rohrförmiges Treiborgan und, mit dem Treiborgan teleskopartig verbunden, Verbindungsmittel aufweist, welche im wesentlichen unkonsolidierte Fasergeflechtverstärkung sowie unter Wärme fließfähiges polymeres Material aufweisen (womit gemeint ist, daß die einzelnen Fasern oder Gruppen einzelner Fasern nicht in nennenswertem Ausmaß durch das polymere Material vereinigt sind) und (b) Wärme aufgebracht wird zur Rückbildung des Treiborgans und um das polymere Material zum Fließen zu veranlassen, damit das sich erholende Treiborgan die Verbindungsmittel konsolidiert, so daß die Träger zusammengekoppelt werden, wobei das polymere Material eine ausreichend hohe Erweichungstemperatur hat, so daß beim Aufbringen von Wärme zur Rückbildung des Treiborgans das Geflecht veranlaßt wird, seinen Flechtwinkel durch Schlüpfen der Geflechtfasern an ihren Kreuzungspunkten zu ändern, um sich der Gestalt des sich erholenden Treiborgans anzupassen, ehe ein weiteres Erwärmen das polymere Material derart zum Fließen bringt, daß das sich erholende Treiborgan die Verbindungsmittel konsolidiert.

2. Verfahren nach Anspruch 1, bei dem aneinanderstoßende Enden der Träger in einer stumpfen Verbindung Ende auf Ende zusammengekoppelt werden.

3. Verfahren nach Anspruch 1, bei dem mindestens einer der Träger ein hohles Ende hat und das Ende des anderen Trägers innerhalb des hohlen Endes angeordnet wird.

4. Anordnung zur Schaffung eines Verbundgegenstandes mit einem unter Wärme erholbaren Treiborgan, welches teleskopartig mit einer Flechtverbindungseinrichtung verbunden ist, die aus Fasern hergestellt ist, welche mit einem polymeren Material vorbeschichtet oder vorgetränkt wurden, das eine ausreichend hohe Erweichungstemperatur hat, so daß beim Erwärmen der Anordnung zum Rückbilden des Treiborgans das Geflecht veranlaßt wird, seinen Flechtwinkel durch Schlüpfen der Geflechtfasern an ihren Kreuzungspunkten zu ändern, um sich der Gestalt des sich erholenden Treiborgans anzupassen, und dann bei weiterem Erwärmen das polymere Material zum Fließen und Konsolidieren des Geflechts zur Schaffung des Verbundgegenstandes veranlaßt wird.

5. Verfahren nach einem der Ansprüche 1 bis 3, bei dem die konsolidierte Verbindungseinrichtung allein imstande ist, die langgestreckten Objekte nach Entfernen des rückgebildeten Treiborgans zusammenzukoppeln, wobei das fließfähige, polymere Material mindestens bei der beabsichtigten Arbeitstemperatur der konsolidierten Verbindugnseinrichtung im wesentlichen fest ist.

6. Anordnung nach Anspruch 4, bei der das polymere Material mindestens bei der beabsichtigten Arbeitstemperatur der konsolidierten Verbindungseinrichtung im wesentlichen fest ist.

7. Anordnung nach Anspruch 4 oder 6, bei der das Treiborgan bei der Rückbildung sich mit einer Spannung im Bereich von 0,5 bis 0,6 MPa (50 bis 60 N/cm$^2$) erholt.

8. Anordnung nach einem der Ansprüche 4, 6 und 7, bei der das polymere Material der Verbindungseinrichtung eine Viskosität von mindestens 2500 Poise, vorzugsweise mindestens 3000 Poise bei der Temperatur hat, bei der die Konsolidierung stattfinden soll.

9. Anordnung nach einem der Ansprüche 4 und 6 bis 8, bei der die Verbindungseinrichtung mit einem aromatischen Polymerisat, vorzugsweise einem Polyarylätherketon getränkte oder überzogene Kohlenstofffaser aufweist.

10. Anordnung nach einem der Anssprüche 4 und 6 bis 9, bei der die Verbindungseinrichtung mit einem Polyamid getränkte oder überzogene Glasfaser aufweist.

11. Anordnung nach einem der Ansprüche 4 und 6 bis 10, bei der das Treiborgan ein Polyarylätherketon aufweist.

12. Anordnung nach einem der Ansprüche 4 und 6 bis 10, bei der das Treiborgan vernetztes Polyvinylidenfluorid oder vernetztes Polyamid aufweist.

15

13. Anordnung nach einem der Ansprüche 4 und 6 bis 12, bei der ein Futter aus im wesentlichen undurchlässigem Material so angeordnet ist, daß es im Gebrauch schichtartig zwischen die Verbindungseinrichtung und einen Träger gebracht werden kann, um den die Verbindungseinrichtung im Gebrauch konsolidiert werden soll.

14. Anordnung nach Anspruch 13, bei der das Futter sich nur teilweise längs der Länge der Verbindungseinrichtung erstreckt.

15. Anordnung nach Anspruch 13 oder 14, bei der das Futter im wesentlichen unvernetztes Polyvinylidenfluorid aufweist.

16. Anordnung nach Anspruch 13, 14 oder 15, bei der das Futter mit einer Schicht Klebstoff auf derjenigen Oberfläche überzogen ist, die im Gebrauch dem Träger zugewandt ist.

17. Anordnung nach einem der Ansprüche 4 und 6 bis 16, bei der das Treiborgan zu einem konsolidierten Gegenstand rückgebildet wurde, das polymere Material anschließend vernetzt wurde, und der konsolidierte Gegenstand verformt wurde, um den konsolidierten Gegenstand durch Wärme erholbar zu machen.

18. Verfahren nach einem der Ansprüche 1 bis 3 und 5, bei dem mindestens ein Füllstück zwischen das Treiborgan und die Verbindungseinrichtung gelegt wird, wenn diese um einen scharfkantigen oder unregelmäßigen Träger angeordnet wird, wobei das Füllstück so gestaltet ist, daß es die Treiborgan-Rückbildungskräfte gleichmäßiger über die Oberfläche des Trägers ausbreitet, um die Gleichförmigkeit der Konsolidierung zu erhöhen.

19. Verfahren nach Anspruch 18, bei dem das (die) Füllstück(e) so gestaltet ist (sind), daß es (sie) eine im wesentlichen glatt konvexe, im wesentlichen durchgehende Außenfläche schafft(en), auf die sich das sich erholende Treiborgan stützt.

20. Anordnung nach einem der Ansprüche 4 und 6 bis 17 bei Benutzung zum Zusammenkoppeln von zwei Trägern, vorzugsweise zwei Rohren.

21. Anordnung nach einem der Ansprüche 4 und 6 bis 17 bei Benutzung zum zusammenkoppeln von zwei Kühlschrankrohren.

22. Anordnung nach einem der Ansprüche 4 und 6 bis 17 konsolidiert um ein rohrförmiges, lasttragendes Beuelement zum Verstärkendes Bauelements über einen wesentlichen Teil seiner Länge.

23. Anordnung nach einem der Ansprüche 4 und 6 bis 17 konsilidiert um eine faserige Hülle, die ein rohrförmiges Teil umgibt, um auf diesem eine Außenschicht zur Verfügung zu stellen, die im wesentlichen undurchlässig ist gegenüber Fluid, mit dem die faserige Hülle sonst im Gebrauch in Berührung gelangen könnte.

24. Satz nicht zusammengebauter oder nur teilweise zusammengebauter Teile zur Rohrverbindung mit einem unter Wärme erholbaren Treiborgan, Verbindungsmitteln, die im wesentlichen unkonsolidierte Fasergeflechtverstärkung und ein unter Wärme fließfähiges polymeres Material aufweisen (womit gemeint ist, daß die einzelnen Fasern oder Gruppen einzelner Fasern nicht in nennenswertem Ausmaß durch das polymere Material vereinigt sind), und einem Futter aus im wesentlichen undurchlässigem Material für die Verbindungsmittel, wobei die Verbindungsmittel und das Futter im Gebrauch um die benachbarten Enden der zu koppelnden Rohre anbringbar sind und das Treiborgan um die Verbindungsmittel anbringbar ist, so daß Wärme aufgebracht werden kann, um die Rückbildung des Treiborgans zu veranlassen und um das fließfähige, polymere Material fließen zu lassen, so daß das sich erholende Treiborgan die Verbindungsmittel konsolidiert und dadurch die Rohre zusammenkoppelt, bei dem das polymere Material eine ausreichend hohe Erweichungstemperatur hat, so daß beim Aufbringen von Wärme zum Rückbilden des Treiborgans das Geflecht veranlaßt wird, seinen Flechtwinkel durch Schlüpfen der Geflechtfasern an ihren Kreuzungspunkten zu ändern, um sich der Gestalt des sich erholenden Treiborgans anzupassen ehe ein weiteres Erwärmen das polymere Material zum Fließen bringt, so daß das sich erholende Treiborgan die Verbindungsmittel konsolidiert.

EP 0 172 039 B1

**25.** Satz nach Anspruch 24, bei dem das Futter mit der Verbindungseinrichtung im voraus zusammengebaut ist.

**26.** Satz nach Anspruch 24 oder 25, bei dem das Futter von der in einem der Ansprüche 13 bis 16 spezifizierten Art ist.

**27.** Satz nach Anspruch 24, 25 oder 26 zusätzlich mit mindestens einem Füllstück, welches so gestaltet ist, daß bei einerAnordnung im Gebrauch zwischen dem Treiborgan und der Verbindungseinrichtung, wenn diese um ein scharfkantiges oder unregelmäßiges, langgestrecktes Objekt angeordnet ist, das Füllstück die Treiborgan-Rückbildungskräfte gleichmäßiger über die Oberfläche des Trägers ausbreitet, um die Gleichförmigkeit des Konsolidierens zu erhöhen.

**28.** Satz nach einem der Ansprüche 24 bis 27, bei dem das Treiborgan und/oder die Verbindungseinrichtung rohrförmige Gestalt hat oder haben.

**29.** Satz nach einem der Ansprüche 24 bis 28, bei dem die Verbindungseinrichtung mit dem Treiborgan im voraus zusammengebaut ist.

**30.** Satz nach einem der Ansprüche 24 bis 29, bei dem das Treiborgan und/oder die Verbindungseinrichtung von der in einem der Ansprüche 7 bis 16 spezifizierten Art ist oder sind.

17

RECOVERY FORCE VS VISCOSITY

*Fig.1.*

EP 0 172 039 B1

Fig.2.

Fig.3a.

Fig.3b.

Fig.3c.

Fig.4.

Fig.5.